# EUROPEAN PATENT SPECIFICATION

(11) **EP 1 890 222 B1**
(45) Date of publication and mention of the grant of the patent: **18.03.2009**
(21) Application number: 07122685.6
(22) Date of filing: 08.07.2004
(51) Int. Cl.: G06F 3/023, G06F 17/27

(54) **Adding interrogative punctuation to an electronic message**
Hinzufügen von Fragezeichen zu elektronischen Nachrichten
Addition de points d'interrogation dans des messages électroniques

(43) Date of publication of application: 20.02.2008
(62) Divisional of application: 04254101.1
(73) Proprietor: Research In Motion Limited, Waterloo, Ontario N2L 3W8 (CA)
(72) Inventor: Griffin, Jason T., Waterloo Ontario N2T 2J5 (CA)
(74) Representative: Phillips, Emily Elizabeth

(56) References cited:
- EP-A- 1 031 914
- WO-A-02/37472
- WO-A-99/15952
- US-A- 5 737 617
- US-A- 6 067 514
- US-B1- 6 396 482
- "AUTOMATIC CAPITALIZATION AND SPACING OF SENTENCES" IBM TECHNICAL DISCLOSURE BULLETIN, IBM CORP. NEW YORK, US, vol. 28, no. 9, February 1986 (1986-02), pages 4160-4161, XP001028463 ISSN: 0018-8689

## Description

### BACKGROUND OF THE INVENTION

### Field of the Invention

Aspects of this invention are related to increasing the efficiency of inputting interrogative punctuation into electronic messages, such as those generated in a handheld electronic device.

### Background Information

Electronic messages, such as those communicated through handheld electronic devices, are often assembled through typing on a keyboard. Some such devices have a reduced keyboard with multiple characters, which can include punctuation marks, assigned to each key. Several schemes for disambiguating the multiple characters assigned to a key include selective action on the key, such as for instance rocking the key one way or another; actuation of a common additional, disambiguating input; or text interpretation. In the latter case, the device predicts the character that was intended by the user based upon a set of rules, or selects a character based on the probability that a word stored in a list in memory is being entered. Characters previously selected can change as additional keystrokes are entered and the possible combinations of characters intended narrows.

Commonly owned U.S. Patent No. 6,396,482 discloses an electronic handheld device in which a sentence can be terminated by actuating the spacebar twice in succession. This action inserts a "." (period) at the end of the sentence, adds a space, and initiates capitalization of the next character input as the first letter of the first word of a new sentence. However, the "?" (question mark) shares a key and is selected by simultaneous actuation of a specialized key.

### SUMMARY OF THE INVENTION

It is the object of the present invention to improve automatic addition of interrogative punctuation. This object is solved by the subject-matter of the independent claims. Preferred embodiments are defined in the dependent claims.

### BRIEF DESCRIPTION OF THE DRAWINGS

A full understanding of the invention can be gained from the following description of the preferred embodiments when read in conjunction with the accompanying drawings in which:
Figure 1 is a front view of a handheld device incorporating the invention.
Figure 2 is a block diagram of the major subsystems of the handheld device of Figure 1 relevant to the implementation of embodiments of the invention.
Figures 3A and 3B when placed side by side present a flowchart illustrating the major steps through which the embodiment of the invention is carried out.

### DESCRIPTION OF THE PREFERRED EMBODIMENTS

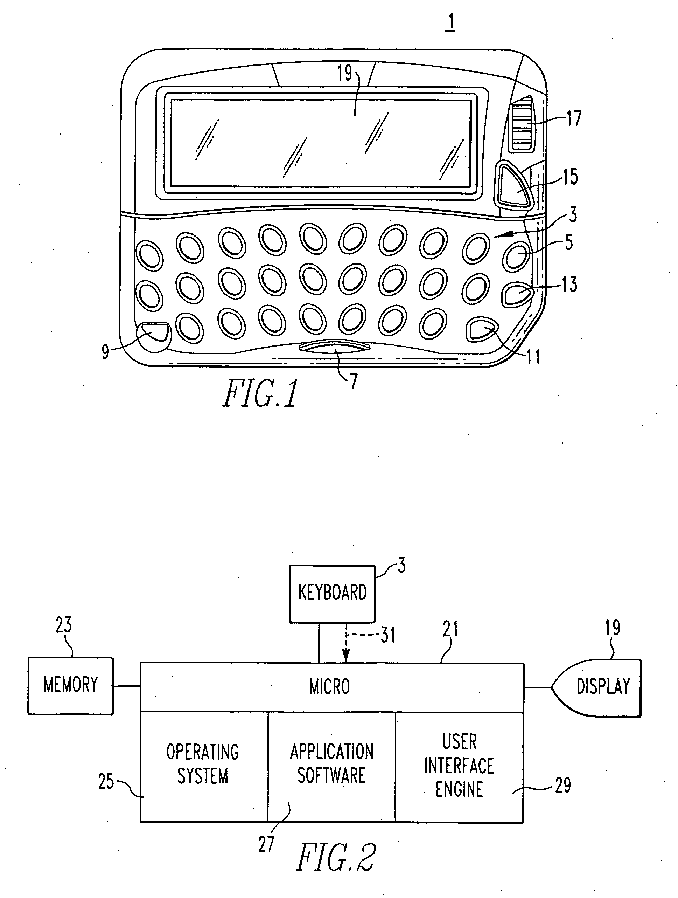

Aspects of the invention are directed to a method and an apparatus for automatically adding interrogative punctuation to electronic messages. Figure 1 illustrates an exemplary handheld electronic device 1 through which the various aspects of the invention may be implemented. The device 1 has a keyboard 3 that includes a plurality of keys 5. The keys 5 implement a "qwerty" keyboard. Alternatively, the keyboard 3 can have a reduced number of keys 5 where each key can input multiple characters. Even in the case of the "qwerty" keyboard of the exemplary device, the keys 5 can input additional characters beside the letters of the "qwerty" keyboard such as numerals and punctuation marks. The present invention may also be used with a full keyboard (not shown).

The keyboard 3 shown includes a number of specialized keys in addition to the keys 5. The specialized keys include a spacebar 7, an alt key 9, a cap key 11, a line feed key 13 and a backspace key 15. A thumbwheel 17 can be used to scroll through (by rotating) and selecting (by pressing the edge) entries on a display 19.

As is known, the device 1 can perform a number of functions, such as for example, sending and receiving e-mails wirelessly, recording notes, storing addresses, maintaining a calendar, and other functions. Many of these functions involve typing in text using the keyboard 3 in a well-known manner. The characters appear in sequence on the display 19 as they are entered. In accordance with an aspect of the invention, the spacebar 7 can also serve as a termination input for terminating the sequence of characters such as at the end of a sentence. This function is implemented by pressing the spacebar twice in succession. As discussed above, this double actuation of the spacebar 7 has been used prior to the present invention to place a "." (period) at the end of the terminated sequence of characters, e.g., the end of a sentence, to add a space after the "." (period) and to initiate capitalization of the next character as the first letter of the first word in a new sentence.

In accordance with this aspect of the present invention, this termination of the sequence of characters, such as by pressing the spacebar 7 twice in succession, results in the addition of interrogative punctuation to the sequence of characters when the first word of the sequence is indicative of an interrogatory. For example, the words "who," "what," "where," and "why" when appearing at the beginning of a sentence indicate that a question is being asked and interrogative punctuation needs to be added to the sequence of characters. Up to now, it has been necessary to manually add the proper punctuation by selecting the appropriate key or keys on the keyboard. In accordance with the invention, the interrogative punctuation is automatically entered when the sequence of characters is terminated such as by pressing the spacebar 7 twice. Other user action, other than pressing the spacebar twice in succession, may be used to terminate the sequence of characters and enter the interrogative punctuation. Use of the double actuation of the spacebar is particularly advantageous as it functions well with the previous practice of using this action to terminate declarative sentences and insert a period. When the two practices are combined, the proper punctuation is inserted with minimum strokes. It should be appreciated that the sequence of characters need not be a complete sentence. For instance, it is common to generate simple statements such as "why?" or "where?" in text messaging for convenience, and economy of time and effort. The sequence is terminated by the user initiating the termination of the sequence of characters at the desired point.

In accordance with an example of the invention, the recognition of the first word in the sequence of characters is indicative of an interrogatory is carried out by determining if the first word matches any such words stored in a stored list. An exemplary list is set forth in Table 1 as follows:

**Table 1**

| | | |
|---|---|---|
| are | aren't | how |
| can | can't | were |
| could | couldn't | why |
| does | doesn't | won't |
| is | isn't | who |
| should | shouldn't | whom |
| would | wouldn't | what |
| where did | where'd | when |
| | | where |
| | | whose |

The first word of the sequence of characters is determined by the first actuation of the spacebar in the sequence of characters. Of course, if the double actuation of the spacebar occurs before any single actuation, a one word interrogatory statement has been entered and the interrogative punctuation is inserted.

Interrogative punctuation entered automatically by the device is the "?" (question mark) at the end of the sequence of characters. If the Spanish language has been selected "¿" (inverted question mark) is also added at the beginning of the sequence of characters. As mentioned, the double actuation of the spacebar 7 can also enter a space after the "?" (question mark) and initiate capitalization of the first character entered in the next sequence of characters, i.e., the next sentence.

If the user does not want the interrogative punctuation, it can be removed manually and replaced by the desired punctuation using the keyboard. Some words that appear at the beginning of a sentence or statement may initiate a declaratory or interrogatory statement. The ambiguity may often be resolved by subsequent words in the sequence of characters. For instance, the word "do" may launch a declaratory statement; "Do it now." or an interrogatory statement "Do you have it?". Thus, in accordance with another aspect of the invention, the sequence of characters can also be examined for combinations of the first word with other words that are indicative of an interrogatory. In the example above, the first and successive (e.g., third or fourth) words combine to establish an interrogatory. The second word is not determinative. For instance, the second statement may be "Do we have it?". Thus, combinations of first and third words in the sequence of characters indicative of an interrogatory statement can be added to the list. Examples of such combinations of words are as follows:

**Table 2**

| | | | |
|---|---|---|---|
| do _ have | does _ have | do_care | does _ care |
| do _ want | does _ want | do _ need | does _ need |
| do _ know | does _ know | | |

Words indicative of an interrogatory do not necessarily occur at the beginning of a sentence. For instance, an interrogatory sentence may begin with a prepositional phrase such as, "if it rains, what shall we do?". Thus, in accordance with another aspect of the invention, the list of words is searched for a match for the first word, or the first and third words occurring after a comma or a semicolon. Again, if automatic insertion of interrogative punctuation is not desired, it can be removed manually, but for most occasions, the correct punctuation will be automatically inserted, thereby expediting the message formation process.

Thus, in accordance with aspects of the invention, interrogative punctuation is inserted into text generated by a handheld device by: 1) inputting a desired sequence of characters; 2) examine the sequence of characters for the first word, or the first and third words at the beginning of the sequence or after a comma or semicolon, indicative of an interrogatory, and 3) inputting termination of the sequence of characters, such as by actuation of the spacebar twice in succession, and automatically adding interrogative punctuation to the sequence of characters when the first word or the first and third words at the beginning of the sequence or after a comma or semicolon, is or are indicative of an interrogatory.

While in the exemplary method, the first word or the first and third words, are identified and matched as the characters are inserted, this matching may be implemented at the time the input of the sequence of characters is terminated.

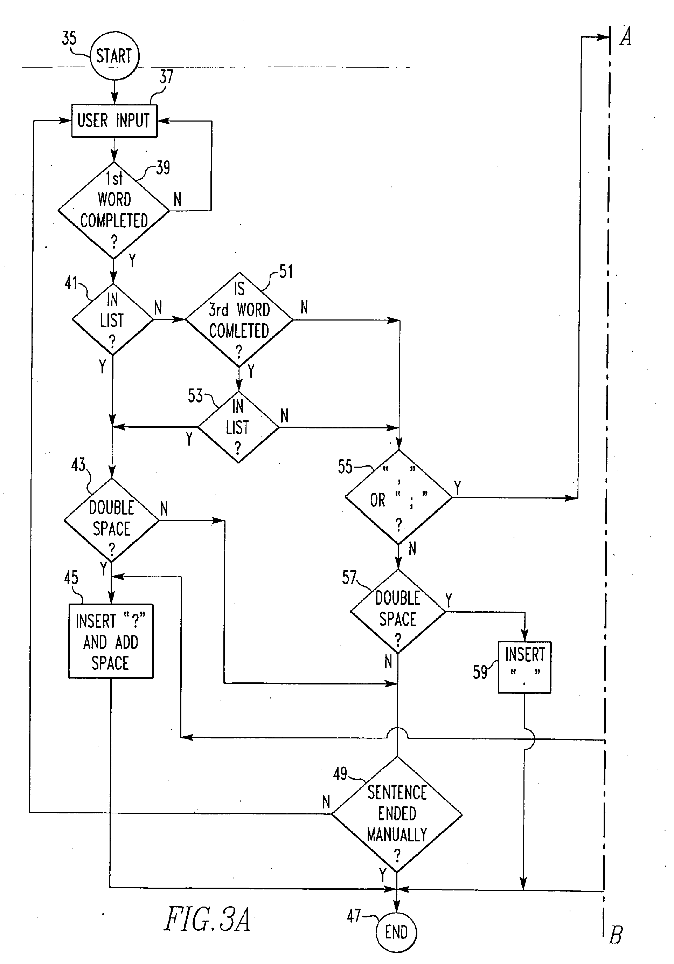

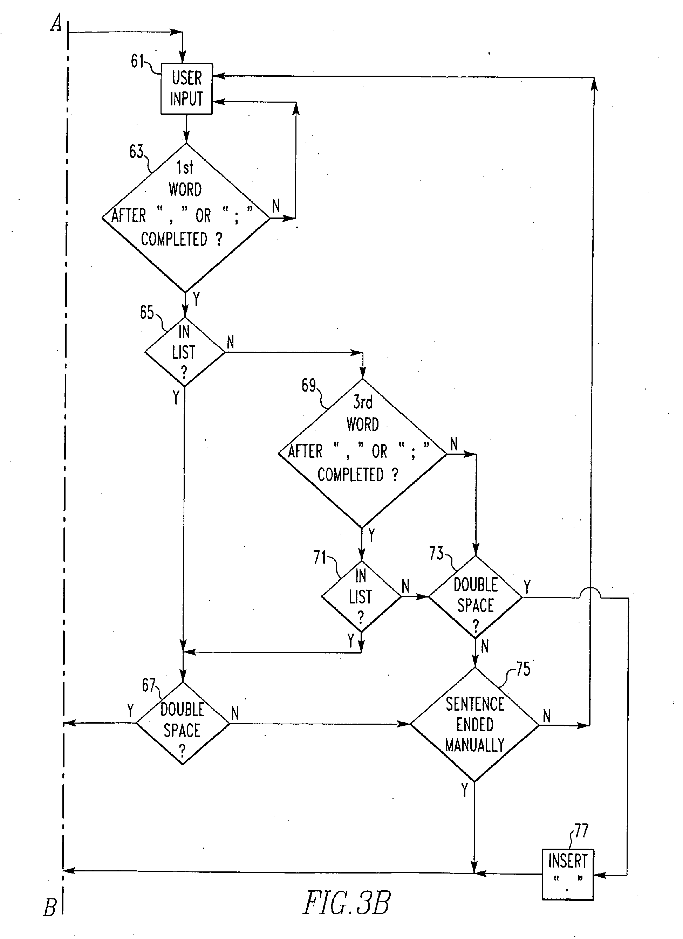

Figure 2 illustrates in block form the major subsystems of the handheld device 1 involved in automatically adding interrogative punctuation to a sequence of characters. The major subsystems include the keyboard 3, a microprocessor 21, a memory 23, and the display 19. This microprocessor 21 runs various software including the operating system 25, applications software 27 and a user interface engine 29. The operating system 25 controls the overall operation of the microprocessor 21 including its interaction with the keyboard 3, memory 23 and display 19, as well as managing the operation of the remaining software, such as the application software 27 and user interface engine 29. Actuation of the keyboard 3 results in a keyboard signal 31 that is received by the microprocessor 21 and directed by the operating system 25 to the application software 27. The application software 27, in turn, performs the routine 33, illustrated in Figure 3, that includes accessing lists of words stored in the memory 23 - for example, those listed in Table 1. The user interface engine 29 controls generation on the display 19 of the message incorporating the interrogative punctuation in accordance with aspects of the invention.

Turning to Figures 3A and 3B, the routine 33 when called at 35 monitors at 37 the user input in the form of the keyboard signals 31. As the sequence of characters is entered, the routine 33 checks at 39 for the end of the first word, which is indicated by a single actuation of the spacebar 7. If this first word is on the list of first words stored in the memory 23, which are indicative of an interrogatory as determined at 41, the inputs are monitored for termination of the sequence of characters as indicated by detection of the double actuation of the spacebar at 43. When this is detected, the interrogative punctuation is added at 45 by inserting the "?" (question mark). In addition, a space is entered after the "?" (question mark) and then the routine is exited at 47. Until the end of the sequence is detected by the entry of the double space at 43, a check is made at 49 for manual ending of the sequence of characters such as entry by the user of the "?" (question mark) by the customary sequence of keyboard signals. As long as the sequence of characters is not terminated, either by the detection of the double spacebar actuation at 43 or the manual ending of the sentence at 49, the routine 33 loops back to pickup the next user input at 37. If the first word is not on the list of first words indicative of an interrogatory when checked at 41, the sequence of characters entered is monitored for completion of the third word at 51. If the first and third words are in the list of words indicative of an interrogatory as detected at 53 - for example, those listed in Table 2, then the routine waits for termination of the sequence of characters either though entry of the double actuation of the spacebar at 43 or the manual ending of the sentence at 49 in the manner described. In one example, there are separate lists of first words and successive words (such as third words and/or fourth words). In another example first and successive words are both on a single list. In yet other examples, there are separate lists for stand alone first words (e.g., why), first words that may require a successive word (e.g., do), and third words (e.g., have).

If neither the first word nor the combination of the first word and third word are in the lists of words indicative of interrogatories, a check is made at 55 for a comma or semicolon in the sequence of characters. If no comma or semicolon has been detected, and the sequence of characters is not terminated by double actuation of the space bar at 57, the routine 33 continues to cycle as each character is entered until the sentence is ended manually at 49. On the other hand, detection of double activation of the spacebar at 57, indicates termination of a declaratory statement (no interrogatory), and hence a "." is entered at 59 and the routine is exited at 47.

When a comma or semicolon is detected at 55 in the sequence of characters entered, the routine 33 operates similarly to before detection of a comma or semicolon by monitoring the additional characters entered at 61 looking for completion of the first word after the comma or semicolon at 63 and determining at 65 whether this word is on the list of first words indicative of interrogatory. If it is, and a double actuation of spacebar is detected at 67, then the interrogative punctuation is entered at 45. However, if the first word after the internal punctuation is not in the list, as detected at 69, then upon completion of the third word after the internal punctuation, these words are checked against the list of first and third words indicative of an interrogatory at 71. If the words are on the list, and subsequently a double spacebar actuation is detected at 67, the interrogative punctuation is entered at 45. Until the third word after the internal punctuation is completed, or after it is determined that these words are not on the list of words indicative of an interrogatory at 69, the routine 33 cycles back waiting for the next user input at 61 or ends the routine upon detection of a double space at 73 or of manual termination of the sentence at 75. Again, if the first word and the first and third words after a comma or semicolon are not on the lists indicating that the statement being typed is not an interrogatory, a "." (period) is entered at 77 when the sequence is terminated by double actuation of the space bar at 73.

While specific embodiments of the invention have been described in detail, it will be appreciated by those skilled in the art that various modifications and alternatives to those details may be developed in light of the overall teachings of the disclosure. Accordingly, the particular arrangements disclosed are meant to be illustrative only and not limiting as to the scope of the invention which is to be given the full breadth of the claims appended.

### Reference Character List

- 1: hand held electronic device
- 3: keyboard
- 5: keys (ltrs, #s, and punct)
- 7: spacebar
- 9: alt key
- 11: cap key
- 13: line feed
- 15: space
- 17: thumbwheel
- 19: display
- 21: microprocessor
- 23: memory
- 25: operating system
- 27: applications software
- 29: user interface engineering requirements
- 31: keyboard signal
- 33: punctuation routine

## Claims

1. A method of inputting interrogative punctuation into a sequence of characters on a handheld electronic device (1), the method comprising:
examining the sequence of characters for a first word and a third word at the beginning of the sequence of characters;
determining whether a first combination comprising the first word and the third word is present in a list of combinations of first and third words indicative of an interrogatory; and
adding the interrogative punctuation to the sequence of characters in response to the first combination being present in the list of combinations.

2. The method of Claim 1, wherein the sequence of characters is input into the handheld electronic device and concludes with a termination sequence.

3. The method of Claim 2, wherein the handheld electronic device (1) has a keyboard (3) including character keys (5) and a full stop input, wherein input of the sequence of characters comprises actuating the character keys (5) and wherein the termination sequence of the sequence of characters comprises actuating the full stop input.

4. The method of Claim 3, wherein the full stop input is a spacebar (7) and activating the full stop input comprises actuating the spacebar (7) twice in succession.

5. The method of Claim 4, wherein actuating the spacebar (7) twice in succession adds a "?" (question mark) at the end of the sequence of characters.

6. The method of Claim 5, wherein actuating the spacebar (7) twice further adds a space after the "?" (question mark).

7. The method of Claim 1, wherein automatically adding the interrogative punctuation comprises adding a "?" (question mark) at the end of the at least one sequence or characters.

8. The method of Claim 1, further comprising:
examining the sequence of characters for a first word at the beginning of the sequence of characters; and
determining that the first word is not present in a list of first words; and, in response thereto, performing the examining of the sequence of characters for a first word and a third word.

9. The method of Claim 1, wherein the sequence of characters defines a statement in the Spanish language, and automatically adding the interrogative punctuation comprises adding "¿" (inverted question mark) at the beginning of the sequence of characters and adding a "?'' (question mark) at the end of the sequence of characters.

10. The method of Claim 1 further comprising:
examining the sequence of characters for another first word after a comma or semicolon;
determining whether the another first word is present in a list of first words indicative of an interrogatory;
examining the at least one sequence of characters for another third word after a comma or semicolon in response to the another first word not being present in the list of first words;
determining whether a second combination comprising the another first word and the another third word is present in the list of combinations; and
automatically adding the interrogative punctuation to the at least one sequence of characters in response to:
the another first word being present in the list of first words, or
the second combination being present in the list of combinations.

11. A handheld electronic device (1) comprising:
a keyboard (3) having a plurality of keys (5) through which a sequence of characters can be input and a termination input through which the at least one sequence of characters can be terminated;
a display (19) on which the sequence of characters input is displayed; and
a processor (21) comprising:
means for examining the sequence of characters for a first word and a third word at the beginning of the sequence of characters;
means for determining whether a first combination comprising the first word and the third word is present in a list of combinations of first and third words indicative of an interrogatory; and
means for adding interrogative punctuation to the sequence of characters on the display (19) in response to the first combination being present in the list of combinations.

12. The device (1) of Claim 11, wherein the means for adding interrogative punctuation to the sequence of characters adds a "?" (question mark) at the end of the sequence of characters.

13. The device (1) of Claim 11, wherein the sequence of characters expresses words in the Spanish language and the means for adding interrogative punctuation to the sequence of characters further adds a "¿" (inverted question mark) in front of the sequence of characters.

14. The device (1) of Claim 11, wherein the keyboard further includes means to override the interrogative punctuation.

15. The device (1) of Claim 11, wherein the termination input comprises a spacebar (7) that is actuated twice to terminate the sequence of characters.

16. The device of Claim 15, wherein the spacebar (7) adds a space after the "?" (question mark) at the end of the sequence of characters when actuated twice in succession.

17. The device of Claim 11 wherein the processor (21) further comprises means for examining the at least one sequence of characters for another first word after a comma or a semicolon, means for determining whether the another first word is present in a list of first words indicative of an interrogatory, means for examining the sequence of characters for another third word after a comma or semicolon in response to the another first word not being present in the list of first words, means for determining whether a second combination comprising the another first word and the another third word is present in the list of combinations, and means for adding the interrogative punctuation to the sequence of characters when the termination input is actuated in response to:
the another first word being present in the list of first words; or
the second combination being present in the list of combinations.

## Patentansprüche

1. Verfahren zum Eingeben einer interrogativen Interpunktion in eine Sequenz von Buchstaben bzw. Zeichen auf einer handgehaltenen bzw. tragbaren elektronischen Vorrichtung (1), wobei das Verfahren aufweist:
Prüfen der Sequenz von Zeichen auf ein erstes Wort und ein drittes Wort am Anfang der Sequenz von Zeichen;
Bestimmen, ob eine erste Kombination, die das erste Wort und das dritte Wort aufweist, in einer Liste von Kombinationen von ersten und dritten Wörter vorhanden ist, die ein Interrogativ anzeigt; und
Hinzufügen der interrogativen Interpunktion zu der Sequenz von Zeichen als Reaktion darauf, dass die erste Kombination in der Liste von Kombinationen vorhanden ist.

2. Verfahren gemäß Anspruch 1, wobei die Sequenz von Zeichen in die tragbare elektronische Vorrichtung eingegeben wird und mit einer Beendigungssequenz endet.

3. Verfahren gemäß Anspruch 2, wobei die tragbare elektronische Vorrichtung (1) eine Tastatur (3) mit Zeichentasten (5) und einer Punkt(full stop)-Eingabe aufweist, wobei eine Eingabe der Sequenz von Zeichen ein Betätigen der Zeichentasten (5) aufweist und wobei die Beendigungssequenz der Sequenz von Zeichen ein Betätigen der Punkt-Eingabe aufweist.

4. Verfahren gemäß Anspruch 3, wobei die Punkt-Eingabe eine Leertaste (7) ist und ein Aktivieren der Punkt-Eingabe ein Betätigen der Leertaste (7) zweimal hintereinander aufweist.

5. Verfahren gemäß Anspruch 4, wobei ein Betätigen der Leertaste (7) zweimal hintereinander ein "?" (Fragezeichen) am Ende der Sequenz von Zeichen hinzufügt.

6. Verfahren gemäß Anspruch 5, wobei ein zweimaliges Betätigen der Leertaste (7) weiter ein Leerzeichen nach dem "?" (Fragezeichen) hinzufügt.

7. Verfahren gemäß Anspruch 1, wobei ein automatisches Hinzufügen der interrogativen Interpunktion ein Hinzufügen eines "?" (Fragezeichen) am Ende der zumindest einen Sequenz von Zeichen aufweist.

8. Verfahren gemäß Anspruch 1, das weiter aufweist:
Prüfen der Sequenz von Zeichen auf ein erstes Wort am Anfang der Sequenz von Zeichen; und
Bestimmen, dass das erste Wort nicht in einer Liste von ersten Wörtern vorhanden ist; und, als Reaktion darauf, Durchführen der Prüfung der Sequenz von Zeichen auf ein erstes Wort und ein drittes Wort.

9. Verfahren gemäß Anspruch 1, wobei die Sequenz von Zeichen eine Aussage in der spanischen Sprache definiert, und ein automatisches Hinzufügen der interrogativen Interpunktion ein Hinzufügen eines "¿" (umgekehrtes Fragezeichen) am Anfang der Sequenz von Zeichen und ein Hinzufügen eines "?" (Fragezeichen) am Ende der Sequenz von Zeichen aufweist.

10. Verfahren gemäß Anspruch 1, das weiter aufweist:
Prüfen der Sequenz von Zeichen auf ein weiteres erstes Wort nach einem Komma oder Semikolon;
Bestimmen, ob das weitere erste Wort in einer Liste von ersten Wörtern vorhanden ist, die ein Interrogativ anzeigt;
Prüfen der zumindest einen Sequenz von Zeichen auf ein weiteres drittes Wort nach einem Komma oder Semikolon als Reaktion darauf, dass das weitere erste Wort nicht in der Liste von ersten Wörtern vorhanden ist;
Bestimmen, ob eine zweite Kombination, die das weitere erste Wort und das weitere dritte Wort aufweist, in der Liste von Kombinationen vorhanden ist; und automatisches Hinzufügen der interrogativen Interpunktion zu der zumindest einen Sequenz von Zeichen als Reaktion darauf:
dass das weitere erste Wort in der Liste von ersten Wörtern vorhanden ist, oder dass die zweite Kombination in der Liste von Kombinationen vorhanden ist.

11. Tragbare elektronische Vorrichtung (1), die aufweist:
eine Tastatur (3) mit einer Vielzahl von Tasten (5), über die eine Sequenz von Zeichen eingegeben werden kann, und einer Beendigungseingabe, über die die zumindest eine Sequenz von Zeichen beendet werden kann;
eine Anzeige (19), auf der die eingegebene Sequenz von Zeichen angezeigt wird; und
einen Prozessor (21), der aufweist:
Mittel zum Prüfen der Sequenz von Zeichen auf ein erstes Wort und ein drittes Wort am Anfang der Sequenz von Zeichen;
Mittel zum Bestimmen, ob eine erste Kombination, die das erste Wort und das dritte Wort aufweist, in einer Liste von Kombinationen von ersten und dritten Wörter vorhanden ist, die ein Interrogativ anzeigt; und
Mittel zum Hinzufügen einer interrogativen Interpunktion zu der Sequenz von Zeichen auf der Anzeige (19) als Reaktion darauf, dass die erste Kombination in der Liste von Kombinationen vorhanden ist.

12. Vorrichtung (1) gemäß Anspruch 11, wobei das Mittel zum Hinzufügen einer interrogativen Interpunktion zu der Sequenz von Zeichen ein "?" (Fragezeichen) am Ende der Sequenz von Zeichen hinzufügt.

13. Vorrichtung (1) gemäß Anspruch 11, wobei die Sequenz von Zeichen Wörter in der spanischen Sprache ausdrückt und das Mittel zum Hinzufügen einer interrogativen Interpunktion zu der Sequenz von Zeichen weiter ein "¿" (umgekehrtes Fragezeichen) am Anfang der Sequenz von Zeichen hinzufügt.

14. Vorrichtung (1) gemäß Anspruch 11, wobei die Tastatur weiter Mittel umfasst zum Aufheben der interrogativen Interpunktion.

15. Vorrichtung (1) gemäß Anspruch 11, wobei die Beendigungseingabe eine Leertaste (7) aufweist, die zweimal betätigt wird, um die Sequenz von Zeichen zu beenden.

16. Vorrichtung gemäß Anspruch 15, wobei die Leertaste (7) ein Leerzeichen nach dem "?" (Fragezeichen) am Ende der Sequenz von Zeichen hinzufügt, wenn zweimal hintereinander betätigt.

17. Vorrichtung gemäß Anspruch 11, wobei der Prozessor (21) weiter aufweist Mittel zum Prüfen der zumindest einen Sequenz von Zeichen auf ein weiteres erstes Wort nach einem Komma oder einem Semikolon, Mittel zum Bestimmen, ob das weitere erste Wort in einer Liste von ersten Wörtern vorhanden ist, die ein Interrogativ anzeigt, Mittel zum Prüfen der Sequenz von Zeichen auf ein weiteres drittes Wort nach einem Komma oder Semikolon als Reaktion darauf, dass das weitere erste Wort nicht in der Liste von ersten Wörtern vorhanden ist, Mittel zum Bestimmen, ob eine zweite Kombination, die das weitere erste Wort und das weitere dritte Wort aufweist, in der Liste von Kombinationen vorhanden ist, und Mittel zum Hinzufügen der interrogativen Interpunktion zu der Sequenz von Zeichen, wenn die Beendigungseingabe betätigt wird, als Reaktion darauf:
dass das weitere erste Wort in der Liste von ersten Wörtern vorhanden ist; oder dass die zweite Kombination in der Liste von Kombinationen vorhanden ist.

## Revendications

1. Procédé d'entrée d'une ponctuation interrogative dans une séquence de caractères sur un dispositif électronique portable (1), le procédé comprenant :
l'examen de la séquence de caractères portant sur un premier mot et un troisième mot au commencement de la séquence de caractères,
le fait de déterminer si une première combinaison comprenant le premier mot et le troisième mot est présente dans une liste de combinaisons de premier et troisième mots indiquant une interrogation ; et
l'addition de la ponctuation interrogative à la séquence de caractères en réponse à la présence de la première combinaison dans la liste de combinaisons.

2. Procédé selon la revendication 1, dans lequel la séquence de caractères est appliquée en entrée dans le dispositif électronique portable et se conclut par une séquence de terminaison.

3. Procédé selon la revendication 2, dans lequel le dispositif électronique portable (1) comporte un clavier (3) contenant des touches (5) de caractères et une entrée de points, dans lequel l'entrée de la séquence de caractères comprend l'actionnement des touches (5) de caractères et dans lequel la séquence de terminaison de la séquence de caractères comprend l'actionnement de l'entrée de points.

4. Procédé selon la revendication 3, dans lequel l'entrée de points est une barre d'espacement (7) et l'activation de l'entrée de points comprend l'actionnement de la barre d'espacement (7) deux fois de suite.

5. Procédé selon la revendication 4, dans lequel l'actionnement de la barre d'espacement (7) deux fois de suite ajoute un « ? » (point d'interrogation) à la fin de la séquence de caractères.

6. Procédé selon la revendication 5, dans lequel l'actionnement de la barre d'espacement (7) deux fois ajoute en outre un espace après le « ? » (point d'interrogation).

7. Procédé selon la revendication 1, dans lequel l'addition automatique de la ponctuation interrogative comprend l'addition d'un « ? » (point d'interrogation) à la fin de la, au moins une, séquence de caractères.

8. Procédé selon la revendication 1, comprenant en outre :
l'examen de la séquence de caractères portant sur un premier mot au commencement de la séquence de caractères ; et
le fait de déterminer que le premier mot n'est pas présent dans une liste de premiers mots ; et, en réponse à ceci, l'exécution de l'examen de la séquence de caractères portant sur un premier mot et un troisième mot.

9. Procédé selon la revendication 1, dans lequel la séquence de caractères définit un énoncé en langue espagnole, et l'addition automatique de la ponctuation interrogative comprend l'addition de "¿" (point d'interrogation à l'envers) au commencement de la séquence de caractères et l'addition d'un « ? » (point d'interrogation) à la fin de la séquence de caractères.

10. Procédé selon la revendication 1, comportant en outre :
l'examen de la séquence de caractères portant sur un autre premier mot après une virgule ou un point virgule ;
le fait de déterminer si l'autre premier mot est présent dans une liste de premiers mots indiquant une interrogation ;
l'examen de la, au moins une, séquence de caractères portant sur un autre troisième mot après une virgule ou un point virgule en réponse à l'absence de l'autre premier mot dans la liste de premiers mots ;
le fait de déterminer si une seconde combinaison comportant l'autre premier mot et l'autre troisième mot est présente dans la liste de combinaisons ; et
l'addition automatique de la ponctuation interrogative à la, au moins une, séquence de caractères en réponse à :
la présence de l'autre premier mot dans la liste de premiers mots, ou
la présence de la seconde combinaison dans la liste de combinaisons.

11. Dispositif électronique portable (1) comportant :
un clavier (3) ayant de multiples touches (5) par lesquelles une séquence de caractères peut être appliquée en entrée et une entrée de terminaison à travers laquelle la, au moins une, séquence de caractères peut être terminée ;
un afficheur (19) sur lequel la séquence de caractères d'entrée est affichée ; et
un processeur (21) comportant :
un moyen destiné à examiner la séquence de caractères portant sur un premier mot et un troisième mot au commencement de la séquence de caractères ;
un moyen pour déterminer si une première combinaison comprenant le premier mot et le troisième mot est présente dans une liste de combinaisons de premier et troisième mots indiquant une interrogation ; et
un moyen destiné à ajouter une ponctuation interrogative à la séquence de caractères sur l'afficheur (19) en réponse à la présence de la première combinaison dans la liste de combinaisons.

12. Dispositif (1) selon la revendication 11, dans lequel le moyen destiné à ajouter une ponctuation interrogative à la séquence de caractères ajoute un « ? » (point d'interrogation) à la fin de la séquence de caractères.

13. Dispositif (1) selon la revendication 11, dans lequel la séquence de caractères exprime des mots en langue espagnole et le moyen destiné à ajouter une ponctuation interrogative à la séquence de caractères ajoute en outre un "¿" (point d'interrogation à l'envers) devant la séquence de caractères.

14. Dispositif (1) selon la revendication 11, dans lequel le clavier comprend en outre un moyen pour agir prioritairement sur la ponctuation interrogative.

15. Dispositif (1) selon la revendication 11, dans lequel l'entrée de terminaison comprend une barre d'espacement (7) qui est actionnée deux fois pour terminer la séquence de caractères.

16. Dispositif selon la revendication 15, dans lequel la barre d'espacement (7) ajoute un espace après le « ? » (point d'interrogation) à la fin de la séquence de caractères lorsqu'elle est actionnée deux fois de suite.

17. Dispositif selon la revendication 11, dans lequel le processeur (21) comporte en outre un moyen pour examiner la, au moins une, séquence de caractères au niveau d'un autre premier mot après une virgule ou un point virgule, un moyen pour déterminer si l'autre premier mot est présent dans une liste de premiers mots indiquant une interrogation, un moyen pour examiner la séquence de caractères au niveau d'un autre troisième mot après une virgule ou un point virgule en réponse à l'absence de l'autre premier mot dans la liste de premiers mots, un moyen pour déterminer si une seconde combinaison comprenant un autre premier mot et l'autre troisième mot est présente dans la liste de combinaisons, et un moyen pour ajouter la ponctuation interrogative à la séquence de caractères lorsque l'entrée de terminaison est actionnée en réponse à :
la présence de l'autre premier mot dans la liste de premiers mots ; et
la présence de la seconde combinaison dans la liste de combinaisons.
